# EUROPÄISCHE PATENTANMELDUNG

(11) **EP 2 510 792 A2**
(43) Veröffentlichungstag der Anmeldung: **17.10.2012**
(21) Anmeldenummer: 12163708.6
(22) Anmeldetag: 11.04.2012
(51) Int. Cl.: A21C 9/04

(54) **Vorrichtung und Verfahren zum Belegen zumindest eines Abschnittes eines Substrats mit mindestens einer Belegkomponente sowie Verwendung der Vorrichtung**

(30) Priorität: 12.04.2011 DE 102011007193
(71) Anmelder: SKS Sondermaschinen- und Fördertechnikvertriebs- GmbH, 10245 Berlin (DE)
(72) Erfinder: Kostajnsek, Anton, 12527 Berlin (DE); Mollath, Günter, 10623 Berlin (DE)
(74) Vertreter: Bressel, Burkhard

(57) **Zusammenfassung**

Zum präzisen positionsgenauen und zuverlässigen Belegen zumindest eines Abschnittes eines Substrats Su mit mindestens einer Belegkomponente Bk werden eine Vorrichtung Bv und ein mit dieser Vorrichtung ausführbares Verfahren vorgeschlagen. Die Vorrichtung umfasst (a) mindestens eine Aufbringvorrichtung Fk für die Belegkomponente Bk, (b) mindestens eine Trägerfläche Tb für das Substrat Su und (c) mindestens eine oberhalb der Trägerfläche Tb und unterhalb der Aufbringvorrichtung Fk angeordnete Zwischenablagevorrichtung Zv mit mindestens einer Zwischenablagefläche Ab für die Belegkomponente Bk, wobei die Belegkomponente Bk mittels der Aufbringvorrichtung Fk auf der Zwischenablagefläche Ab ablegbar ist. Die Zwischenablagefläche Ab ist ortsfest gehalten, sodass die Belegkomponente Bk vor dem Überführen auf das Substrat Su ruht, und die Zwischenablagefläche Ab ist bewegbar, sodass die Belegkomponente Bk von mindestens einer Depositionsfläche Df auf der Zwischenablagefläche Ab positionsgenau auf das Substrat Su überführbar ist. Das Verfahren umfasst folgende Verfahrensschritte: (a) Fördern der Belegkomponente Bk mittels mindestens einer Aufbringvorrichtung Fk auf mindestens eine Zwischenablagefläche Ab von mindestens einer Zwischenablagevorrichtung Zv, (b) Positionieren des Substrats Su auf mindestens einer Trägerfläche Tb unterhalb der Zwischenablagefläche Ab und (c) Bewegen der Zwischenablagefläche Ab, sodass die Belegkomponente Bk von mindestens einer Depositionsfläche Df auf der Zwischenablagefläche Ab positionsgenau auf die Trägerfläche Tb überführt wird, während die Zwischenablagefläche Ab ortsfest gehalten wird.

## Beschreibung

Die Erfindung geht von einer Vorrichtung und einem Verfahren zum Belegen zumindest eines Abschnittes eines Substrats mit mindestens einer Belegkomponente aus und gibt insbesondere eine Verwendung der Vorrichtung zum Belegen eines Lebensmittels an.

Derartige Vorrichtungen und Verfahren zum Belegen von Lebensmitteln mit einer Belegkomponente, beispielsweise Pizzateigwaren mit Käsespänen und/oder Tomatensauce, sind bekannt. Derartige Vorrichtungen umfassen unter anderem eine Aufbringvorrichtung für die Käsespäne und/oder die Tomatensauce und eine Trägerfläche für die Pizzateigböden.

Zum Verteilen von Zutaten, beispielsweise geriebenem Käse, auf einem Teigboden, beispielsweise Pizzaboden, wird in EP 1 875 805 A1 eine hierfür vorgesehene Vorrichtung beschrieben. Der Teigboden wird aus einem Vorbackofen kommend auf einem Förderband transportiert. Die Vorrichtung umfasst einen Schlitten, der einen mit einem öffenbaren Verschluss versehenen Formatbehälter, in dem sich eine vorbestimmte Menge an Zutaten befindet, ferner einen Zutatenverteilungsschacht mit Rechen mit Zinken, der darauf angepasst ist, die Zutaten beim Herunterfallen zu zerstreuen, und einen Trichter oberhalb des Zutatenverteilungsschachtes aufweist. Sobald der Teigboden den Vorbackofen verlassen hat, wird eine Bewegung des Schlittens in Fahrtrichtung ausgelöst, wobei die Geschwindigkeit des Schlittens an die Geschwindigkeit des Teigbodens auf dem Förderband angepasst wird und sich der Schlitten somit synchron über dem Teigboden bewegt. Der Verschluss am Formatbehälter wird dann geöffnet, sodass die Zutaten aus dem Formatbehälter herausfallen, mit dem Trichter zentriert und in den Zutatenverteilungsschacht fallen. Die Zinken der Rechen werden beim Öffnen des Formatbehälters in die Horizontale eingeschwenkt, sodass die Zutaten gleichmäßig über den Durchmesser des Zutatenverteilungsschachtes verteilt und auf den Teigboden zentriert werden.

In einer anderen Verfahrensweise wird gemäß AT-Patentschrift Nr. 375 813 Rieselgut, beispielsweise Mehl oder Paniermehl, auf die Oberfläche eines Teigstückes aus weichem, insbesondere aus hochwasserhaltigem Teig, vor der maschinellen Weiterverarbeitung aufgebracht, indem zuerst Rieselgut auf die für das Teigstück vorgesehene Transportfläche aufgestreut wird. Dann wird das Teigstück auf die auf der Transportfläche gebildete Rieselgutschicht, vorzugsweise durch Fallenlassen, aufgedrückt, und dann wird die Oberseite des auf der Rieselgutschicht liegenden Teigstückes mit Rieselgut bestreut. Gegebenenfalls wird die auf der Teigstückoberseite gebildete Rieselgutschicht vor der Weiterverarbeitung des Teigstückes in die Teigstückoberfläche eingedrückt. Zum Bestreuen sind oberhalb des Transportbandes, in Transportrichtung gesehen, vor und nach dem Austrittsstutzen zum Platzieren von Teigstücken auf dem Transportband je eine Berieselungseinrichtung angeordnet, welche Rieselgut auf das darunter liegende Transportband bzw. auf die auf dem Transportband liegenden Teigstücke in einem breiten kontinuierlichen, einem Wasserfall ähnlichen Vorhang, fallen lassen.

In einer weiteren Ausführungsvariante des "Wasserfallverfahrens" (DE 10 2007 005 735 A1) wird eine Streukomponente, zum Beispiel geriebener Käse, von einer Zuführeinrichtung in Form eines Förderbandes in einer Zuführrichtung gefördert, bis diese über einen Abwurfrand der Zuführeinrichtung abgegeben und auf eine Backware verteilt wird. Die Backware wird auf einem Produktförderer in Form eines Förderbandes kontinuierlich befördert. Die Streukomponente wird während des Abgabezyklus kontinuierlich von der Zuführeinrichtung auf die Backware gefördert. Zwischen dem Produktförderer und der Zuführeinrichtung ist ferner ein Leitschacht mit einem Aufnahmebereich angeordnet. Der Leitschacht ist zylindrisch, wobei sein Durchmesser dem Durchmesser der Backware entspricht. Zu Beginn des Abgabezyklus auf eine einzelne Backware wird der Leitschacht aus einer Anfangsposition in Richtung auf die Backware abgesenkt, in der das Abfördern der Streukomponente von der Zuführeinrichtung beginnt. Der Leitschacht wird dann in Produktförderrichtung in Positionsübereinstimmung mit der Backware verfahren, bis eine vorbestimmte Masse der Streukomponente von der Zuführeinrichtung abgefördert und auf der Backware angeordnet ist, woraufhin der Leitschacht von der Backware in vertikaler Richtung in seiner Endposition abgehoben und entgegen der Produktförderrichtung in seine Anfangsposition verfahren wird.

Eine weitere Ausführungsform ist in US Patent Nr. 4,264,634 beschrieben. In diesem Falle wird geriebener Käse auf Pizzaböden aufgestreut. Die noch unbestreuten Pizzaböden werden auf einem Transportförderer zu der dort beschriebenen Vorrichtung zum Aufstreuen des Käses befördert. Die Vorrichtung weist ein Zwischentransportförderband auf, das sich zwischen dem Transportförderer und einer Käsereibeeinrichtung befindet. Das Zwischentransportförderband und der Transportförderer sind jeweils parallel zueinander angeordnet. Der oberhalb des Zwischentransportförderbandes erzeugte geriebene Käse gelangt auf dieses Band und wird über eine vordere Leitrolle auf darunter beförderte Pizzaböden fallen gelassen. Das Zwischentransportförderband wird nur diskontinuierlich betrieben. Die Käseteilchen werden auf dem Zwischentransportförderband in einem vorbestimmten Muster und in einer vorgegebenen Dicke abgelegt. Die Käsereibeeinrichtung ist derart ausgebildet, dass der geriebene Käse in einem vorgegebenen Muster auf das Zwischentransportförderband und von dort auf die Pizzaböden gelangt.

Allerdings bestehen bei Verwendung der vorstehend beschriebenen Vorrichtungen Probleme, geriebenen Käse in einer gleichmäßigen Schicht auf Teigwaren abzulegen und zwar vorzugsweise innerhalb eines vorgegebenen Flächenbereiches eines Teigwarenstückes und gegebenenfalls sogar in einem vorgegebenen Muster, beispielsweise unter Aussparung von Flächenbereichen zur Aufnahme weiterer Belegkomponenten, wie Wurstscheiben. Denn einige der bekannten Vorrichtungen und Verfahren sehen zwar vor, dass geriebener Käse auch in vorgegebenen Flächenbereichen der Teigwaren abgelegt werden, während andere Flächenbereiche frei bleiben (beispielsweise DE 10 2007 005 735 A1), oder dass ein bestimmtes Muster auf dem Teigwarenstück erzeugt wird (US-Patent Nr. 4,264,634). Aufgrund der jeweiligen Bauweise der Vorrichtungen zum Aufbringen des geriebenen Käses ist es jedoch kaum möglich, den geriebenen Käse präzise auf das Teigwarenstück ausschließlich in den gewünschten Bereichen aufzubringen. Dieses Problem ergibt sich insbesondere daraus, dass die Käseteilchen die Neigung haben, aneinander zu kleben, sodass beispielsweise mit der Vorrichtung des US-Patents Nr. 4,264,634 Käse teilweise nur in Form größerer Agglomerate über die vordere Leitrolle auf das darunter angeordnete Teigwarenstück fällt.

Von daher liegt der Erfindung die Aufgabe zugrunde, eine Vorrichtung und ein Verfahren zu finden, mit denen Teigwarenstücke problemlos selektiv und gezielt mit Käsespänen ausschließlich in einem gewünschten Flächenbereich belegt werden können, beispielsweise unter Aussparung eines definierten Randes der Teigwarenstücke. Beim Belegen sollen möglichst geringe oder überhaupt keine Reste der Käsespäne erzeugt werden, die nicht auf die Teigwarenstücke gelangen. Ferner soll es auch leicht möglich sein, den Flächenbereich bzw. das Muster zu ändern, wenn Teigwarenstücke beispielsweise mit unterschiedlicher Form und/oder Größe mit geriebenem Käse belegt werden sollen und/oder wenn der geriebene Käse in unterschiedlichen Mustern auf die Käseteigstücke aufgebracht werden soll.

Soweit nachfolgend in der Beschreibung und in den Ansprüchen einzelne Begriffe in der Singularform verwendet werden, beispielsweise die Begriffe Belegkomponente, Aufbringvorrichtung, Trägerfläche, Zwischenablagevorrichtung, Zwischenablagefläche, Depositionsfläche und andere, sind zusätzlich auch deren Pluralbegriffe gemeint, unabhängig von dem Zusammenhang, in dem die Begriffe verwendet werden, sofern nicht ausdrücklich etwas Anderes angegeben wird. In umgekehrter Art und Weise kann, sofern bestimmte Begriffe jeweils in der Pluralform verwendet werden, an deren Stelle auch die jeweilige Singularform treten, unabhängig von dem Zusammenhang, in dem diese Begriffe verwendet werden.

Die vorstehend genannten Aufgaben werden gelöst durch die Vorrichtung zum Belegen zumindest eines Abschnittes eines Substrats mit mindestens einer Belegkomponente gemäß Patentanspruch 1, das Verfahren zum Belegen zumindest eines Abschnittes eines Substrats mit mindestens einer Belegkomponente nach Patentanspruch 13 und die Verwendung der erfindungsgemäßen Vorrichtung zum Belegen des Substrats nach Patentanspruch 14. Bevorzugte Ausführungsformen der Erfindung sind in den Unteransprüchen angegeben.

Die erfindungsgemäße Vorrichtung dient vorzugsweise zum Belegen eines Lebensmittels und ganz besonders bevorzugt zum Belegen eines Teigstückes mit geriebenem Käse oder mit Tomatensauce.

Die erfindungsgemäße Vorrichtung zum Belegen zumindest eines Abschnittes des Substrats mit mindestens einer Belegkomponente, beispielsweise mit geriebenem Käse, umfasst: (a) mindestens eine Aufbringvorrichtung für die Belegkomponente, (b) mindestens eine Trägerfläche für das Substrat und (c) mindestens eine oberhalb der Trägerfläche und unterhalb der Aufbringvorrichtung angeordnete Zwischenablagevorrichtung mit mindestens einer Zwischenablagefläche für die Belegkomponente. Die Belegkomponente ist mittels der Aufbringvorrichtung auf der Zwischenablagefläche ablegbar. Die Zwischenablagefläche ist ortsfest gehalten, sodass die Belegkomponente vor dem Überführen auf die Trägerfläche ruht. Die Zwischenablagefläche kann an einem Rand ortsfest gehalten sein oder an einander gegenüberliegenden Rändern. Ferner ist die Zwischenablagefläche bewegbar, sodass die Belegkomponente von mindestens einer Depositionsfläche auf der Zwischenablagefläche positionsgenau auf das Substrat überführbar ist. Unter einer ortsfesten Halterung ist hier eine Halterung ohne Relativgeschwindigkeit in einem bevorzugt ruhenden oder gegebenenfalls konstant bewegten, d.h. also nicht beschleunigten, Inertialsystem zu verstehen, d.h. besonders bevorzugt eine Halterung, die gegenüber der erfindungsgemäßen Vorrichtung nicht bewegt wird. Denkbar ist auch eine Halterung, die gegenüber der erfindungsgemäßen Vorrichtung mit einer konstanten Geschwindigkeit bewegt wird, etwa mit der Geschwindigkeit der Trägerfläche und bevorzugt parallel zu dieser.

Durch die ortsfeste Halterung der Zwischenablagefläche kann die Belegkomponente zunächst auf der Zwischenablagefläche abgelegt werden, während diese ruht. Dies ermöglicht eine zeitliche Entkoppelung der Überführung der Belegkomponente auf die Zwischenablagefläche von der Überführung der Belegkomponente auf das Substrat. Während also das Substrat während der Überführung der Belegkomponente auf die Zwischenablagefläche weiter befördert wird, beispielsweise mittels eines Transportförderers, kann die Belegkomponente sehr einfach gezielt auf der Zwischenablagefläche abgelegt werden, ohne dass der Ablagevorgang durch die Bewegung des Substrats oder insbesondere auch der Zwischenablagefläche selbst in irgendeiner Art und Weise beeinflusst würde. Auf diese Art und Weise sind leicht Muster erzeugbar. Selbstverständlich ist es dadurch auch möglich, die zu belegende Fläche des Substrats mit der Belegkomponente auf der Zwischenablagefläche exakt vorzubilden. Nachdem die Belegkomponente in einem ersten Schritt auf der Zwischenablagefläche abgelegt worden ist, wird sie erfindungsgemäß positionsgenau von der Zwischenablagefläche auf das Substrat überführt. Dadurch wird eine präzise Übertragung des auf der Zwischenablagefläche erzeugten Musters oder der zu belegenden Fläche auf das Substrat ermöglicht.

Durch die ortsfeste Halterung wird zudem ermöglicht, dass die Belegkomponente auch nach dem Aufbringvorgang ruht, d.h. nicht in Bewegung versetzt wird, zumindest solange, bis die Zwischenablagefläche unter der Belegkomponente weggezogen oder auf andere Art und Weise entfernt ist, während beispielsweise Käsespäne im Falle der herkömmlichen Aufbringvorrichtungen, etwa wie bei DE 10 2007 005 735 A1 und US-Patent Nr. 4,264,634, für den Aufbringvorgang auf einem Transportband befördert und dann über einen Abwurfrand auf ein Substrat abgeworfen werden. Bei der vorliegenden Erfindung wirken auf die Belegkomponente nach dem Ablegen auf der Zwischenablagefläche demnach keine horizontalen und vertikalen Kräfte ein, sodass eine zunächst eingestellte Verteilung der Belegkomponente auf der Zwischenablagefläche sicher erhalten bleibt. Zum Übertragen der Belegkomponente auf das Substrat kann die Zwischenablagefläche dann ohne Beeinflussung der Verteilung der Belegkomponente auf ihr sehr schnell bewegt werden, sodass die Belegkomponente von dieser abgeschleudert wird. Denn wenn die Belegkomponente gegebenenfalls geringfügig an der Zwischenablagefläche anhaftet, wäre eine Übertragung auf das Substrat beeinträchtigt. Hierzu kann die Zwischenablagefläche flexibel und deformierbar sein. Die Kombination der ortsfesten Halterung mit einer daher unbewegten Belegkomponente einerseits und einer gegebenenfalls sehr schnellen Bewegung der Zwischenablagefläche zum positionsgenauen Übertragen kann die Belegkomponente zuverlässig vollständig von der Zwischenablagefläche abgelöst und auf das Substrat übertragen werden und eine auf der Zwischenablagefläche einmal erzeugte Verteilung in einem Muster praktisch ohne Veränderung auf dem Substrat reproduziert werden.

In einer bevorzugten Ausführungsform der Erfindung ist zumindest ein Teil der Zwischenablagefläche in einer horizontalen Richtung translatorisch bewegbar. Durch die ortsfeste Halterung und horizontale translatorische Bewegung wird zuverlässig verhindert, dass die Belegkomponente bis zu dem Zeitpunkt keiner vertikalen Beschleunigungskraft ausgesetzt ist, zu dem die Belegkomponente positionsgenau auf das Substrat übertragen wird.

In einer weiter bevorzugten Ausführungsform der Erfindung ist zumindest ein Teil der Zwischenablagefläche entlang einer in horizontaler Richtung translatorisch verschiebbaren, vorzugsweise geraden, Linie um >90°, bevorzugt etwa 180°, nach unten umlenkbar, sodass die auf der Zwischenablagefläche abgelegte Belegkomponente beim Umlenken der Zwischenablagefläche auf das Substrat fällt. Diese Linie erstreckt sich vorzugsweise senkrecht zur Verschiebungsrichtung. Die Zwischenablagefläche wird durch die Verschiebung unter der Belegkomponente weggezogen. Hierzu wird die Zwischenablagefläche während des Übertragungsvorganges auf das Substrat deformiert. Die Bewegung der Zwischenablagefläche wird durch die Umlenkung an der translatorisch verschiebbaren Linie erzeugt, während die Zwischenablagefläche im Übrigen (in einem Bereich zwischen einer ortsfesten Halterung der Zwischenablagefläche und der verschiebbaren Linie) in Ruhe bleibt, d.h. sich nicht bewegt und in jedem Falle nicht beschleunigt wird. Entsprechend der Verschiebung dieser Linie wird auch die Ablagefläche sukzessive verkleinert, sodass sie unter der Belegkomponente nach und nach weggezogen wird und die Belegkomponente daher nach und nach auf das darunter angeordnete Substrat fällt.

Durch die Umlenkung erfährt die Belegkomponente zudem im Umlenkungsbereich eine radiale Beschleunigung, zumindest dann, wenn die Belegkomponente an der Zwischenablagefläche (zumindest minimal) haftet. Dies führt daher gegebenenfalls zu einer vertikalen Beschleunigung nach unten. Die Umlenkung führt dazu, dass die Belegkomponente durch die entstehende Fliehkraft (= fehlende Zentripetalkraft) von der Zwischenablagefläche (nach unten) abgeschleudert wird, sodass eventuell bestehende Haftkräfte zwischen der Belegkomponente und der Zwischenablagefläche zuverlässig überwunden werden. Dies steht im Gegensatz zu herkömmlichen Vorrichtungen und Aufbringverfahren, bei denen sich die Belegkomponente von dem Förderband nicht ohne weiteres ablöst. Daher muss beispielsweise in der Vorrichtung des US-Patents Nr. 4,264,634 zusätzlich ein Abstreifelement vorgesehen werden, um eventuell anhaftende Käsespäne von dem Band abzulösen. Eventuell anhaftende Käsespäne haften dann gegebenenfalls auch an dem Abstreifelement oder verschmutzen dieses.

In einer weiter bevorzugten Ausführungsform der Erfindung ist die Zwischenablagefläche durch mindestens ein Band oder einen Gurt gebildet. Dieses Ablageband oder der Ablagegurt trägt die Belegkomponente und ist deformierbar, sodass es/er entlang der verschiebbaren Linie nach unten umgelenkt werden kann.

In einer weiter bevorzugten Ausführungsform der Erfindung umfasst die Zwischenablagevorrichtung ferner mindestens ein Stützgerüst für das Ablageband oder den Ablagegurt. Das Stützgerüst kann insbesondere in Form einer Platte ausgebildet sein. Die Stützplatte ist insbesondere starr. Das Ablageband ist vorzugsweise in einer Schlaufe um das Stützgerüst herum geführt. Dadurch kann das Stützgerüst in der Schlaufe im Wesentlichen horizontal verschoben werden und zwar in der Richtung des Bandverlaufes oder in entgegen gesetzter Richtung, sodass die Schlaufe über den Umfang des Stützgerüstes abgewälzt wird. Dies führt zu einer Verschiebung, insbesondere zu einem Linearvorschub, des Stützgerüstes relativ zu dem Ablageband, da die Schlaufe ortsfest befestigt ist.

Die horizontale Verschiebung des Stützgerüstes in der Bandschlaufe wird mittels mindestens eines Zwischenablageaktors erzeugt. Dieser Aktor wird bevorzugt hydraulisch oder pneumatisch betrieben. Der Zwischenablageaktor erzeugt eine Horizontalkraft auf das Stützgerüst und zwar zur Erzeugung einer die verschiebbare Linie versetzenden Bewegung und eine Horizontalkraft zur Erzeugung einer Bewegung in einer dazu entgegengesetzten Richtung, damit das Stützgerüst wieder in eine Ausgangsposition zurückversetzt werden kann. Dieser Aktor kann dazu ausgelegt sein, dass die für die jeweilige Horizontalbewegung aufgewendete Energie wieder zurückgewonnen wird. Hierzu kann der Aktor beispielsweise pneumatisch betrieben werden und bei der translatorischen Bewegung zumindest in der Endphase der Linearbewegung gegen ein Luftreservoir arbeiten, das zum einen für die Endanschlagsdämpfung und zum anderen zum Rückantrieb verwendet werden kann.

Durch die vorstehende Ausbildung der erfindungsgemäßen Vorrichtung kann die Zwischenablagefläche in Form des Bandes entlang einer verschiebbaren Linie umgelenkt werden, und zwar vorzugsweise um etwa 180° (180°± 20°). Das Ablageband ist ortsfest befestigt, während das Stützgerüst in Form der Stützplatte, das von dem Ablageband zumindest teilweise in Form der Schlaufe umschlungen wird, translatorisch bewegt wird. Durch die horizontale Verschiebung des Stützgerüstes wird die Linie, entlang der das Ablageband umgelenkt wird, translatorisch verschoben, damit die auf dem Ablageband abgelegte Belegkomponente auf das Substrat überführt wird, denn durch die Verschiebung der Linie wird das Ablageband unter der Belegkomponente sukzessive weggezogen. In dem Bereich der Zwischenablagefläche, der sich zwischen der ortsfesten Befestigung des Ablagebandes und der verschiebbaren Linie befindet, bewegt sich das Ablageband jedoch nicht.

Um die Zwischenablagefläche entlang der verschiebbaren Linie umlenken und die Linie translatorisch verschieben zu können, ist das Ablageband um eine verschiebbare Abwurfkante des Stützgerüstes umlenkbar herum geführt und durch den Vorschub des Stützgerüstes um diese Kante herum ziehbar. Durch die translatorische Verschiebbarkeit des Stützgerüstes ist die Abwurfkante verschiebbar. Die Abwurfkante bildet somit die verschiebbare Linie. Die Schlaufe um das Stützgerüst kann bevorzugt lediglich um die Abwurfkante des Stützgerüstes herumgeführt sein oder zusätzlich auch um eine weitere Kante des Stützgerüstes, die der Abwurfkante gegenüber liegt. Der Vorschub der Abwurfkante dient zur Überführung der Belegkomponente auf das Substrat. Falls das Ablageband auch um die weitere Kante des Stützgerüstes herum geführt ist, kann es zusätzlich wieder auf die Oberseite des Stützgerüstes zurückgeführt werden, indem es auch um diese weitere Kante herum geschlungen und dort ortsfest gehalten wird.

Wenn das Ablageband über die beiden genannten Kanten geführt wird, kann es an beiden Bandenden vorzugsweise auf der Oberseite des Stützgerüstes gehalten werden. Hierzu sind oberhalb des Stützgerüstes ortsfeste Halterungen vorgesehen, die das Ablageband dort ortsfest haltern.

Der Krümmungsradius der Abwurfkante beeinflusst maßgeblich die Kräfte, die auf die Belegkomponente wirken, während das Ablageband unter dieser weggezogen wird. Bei sehr kleinem Krümmungsradius, d.h. scharfer Abwurfkante, treten hohe Fliehkräfte auf, insbesondere wenn das Stützgerüst relativ zu der Zwischenablagefläche sehr schnell bewegt wird. Aus diesem Grunde ist eine scharfe Abwurfkante vorteilhaft, um die Belegkomponente zuverlässig auf das Substrat zu überführen. Andererseits verschleißt eine sehr scharfe Abwurfkante ein darüber gezogenes Ablageband sehr stark, sodass eine Abwurfkante mit einem mittleren Krümmungsradius, beispielsweise von 1 bis zu wenigen mm, beispielsweise 3-5, mm bevorzugt ist.

Das Stützgerüst wird relativ zu der Halterung für die Zwischenablagefläche bevorzugt schnell bewegt, beispielsweise mit einer Geschwindigkeit von 0,5 - 5, vorzugsweise 1 - 2, m/s.

Obwohl das um das Stützgerüst herum geführte Ablageband zwar möglichst eng an dem Stützgerüst anliegt, um eine schnelle und präzise Bewegung des Ablagebandes zu erreichen, kann nicht verhindert werden, dass das Ablageband an der Unterseite des Stützgerüstes durch die Schwerkraft geringfügig durchhängt. Um gleichwohl einen geringen Abstand zwischen der Zwischenablagevorrichtung und einem auf der Trägerfläche transportierten Substrat einhalten zu können, ist die Zwischenablagefläche in einer weiter bevorzugten Ausführungsform der Erfindung in einem Winkel >0° zu der Trägerfläche geneigt. Bevorzugterweise neigt sich die Zwischenablagefläche zur Abwurfkante nach unten. Damit wird an dieser Stelle ein möglichst geringer Abstand zwischen der Zwischenablagefläche und dem darunter befindlichen Substrat erreicht, um eine präzise Übertragung der Belegkomponente auf das Substrat erreichen zu können, während der Abstand zu der gegenüber liegenden Kante hin zunimmt, sodass das durchhängende Ablageband die lichte Höhe unter der Zwischenablagevorrichtung nicht einschränkt.

In einer weiter bevorzugten Ausführungsform der Erfindung ist unterhalb der Aufbringvorrichtung für die Belegkomponente und oberhalb der Zwischenablagevorrichtung mindestens eine Formatvorrichtung zur gezielten Verteilung der Belegkomponente auf der Zwischenablagefläche angeordnet. Die Formatvorrichtung ist vorzugsweise ein in Form der aufzubringenden Verteilung der Belegkomponente auf dem Substrat geformter Rand. Zusätzlich kann die Formatvorrichtung im oberen Bereich auch eine trichterförmige Erweiterung aufweisen, um in die Formatvorrichtung gegebene Belegkomponente in die Formatvorrichtung einzuweisen. Dieser Rand kann zur Belegung eines kreisrunden Pizzateigstückes ebenfalls kreisrund sein und zwar mit einem Durchmesser, der dem Durchmesser des Pizzateigstückes entspricht oder der geringfügig kleiner ist, um beispielsweise den Rand des Pizzateigstückes nicht mit der Belegkomponente zu belegen. Da das Substrat auch während des Übertragungsvorganges mittels der Trägerfläche fortbewegt wird, ist es ferner vorteilhaft, die Form der Formatvorrichtung in dem Umfange in der Förderrichtung des Substrats zu stauchen oder zu verlängern (je nachdem, ob der horizontale Vorschub der Zwischenablagefläche in derselben Richtung erfolgt wie die Förderrichtung der Trägerfläche oder in der entgegen gesetzten Richtung), der der Fortbewegung des Substrats während des Übertragungsvorganges von der Zwischenablagefläche auf das Substrat entspricht. Damit würde für eine kreisrunde Belegung des Substrats eine Ellipsenform der Formatvorrichtung zu wählen sein. Das Verhältnis der Länge ersten Achse D₂ (parallel zur Förderrichtung der Trägerfläche) zur Länge einer zweiten Achse D₁ (senkrecht zur Förderrichtung der Trägerfläche) der Ellipse verhält sich in diesem Falle idealerweise wie das Verhältnis D₂/D₁ = (1 - v_{Su}/v_{Zf}) (bei einer Relativbewegung in derselben Richtung [Parallelbewegung]) oder D₂/D₁ = (1 + v_{Su}/v_{Zf}) (bei einer Relativbewegung in entgegen gesetzten Richtungen [Antiparallelbewegung]), wobei v_{Su} die Geschwindigkeit der translatorischen Bewegung des Substrats auf der Trägerfläche und T_{Zf} die Geschwindigkeit der verschiebbaren Linie für die Überführung der Belegkomponente von der Zwischenablagefläche auf das Substrat sind.

Diese Stauchung oder Verlängerung der Belegkomponentenverteilung auf der Zwischenablagefläche ist dann nicht erforderlich, wenn die erfindungsgemäße Vorrichtung derart ausgebildet ist, dass die ortsfeste Halterung für die Zwischenablagefläche parallel zur Trägerfläche bewegt wird, d.h. mit ihr "mitwandert" (mitbewegt wird), sodass sich keine Relativbewegung zwischen beiden ergibt. In diesem Falle wird eine Verzerrung der auf der Zwischenablagefläche erzeugten Verteilung der Belegkomponente bei der Übertragung auf das Substrat ausgeschlossen.

Die Formatvorrichtung kann insbesondere durch einen aufrecht stehenden und eine Fläche umgebenden Metallblech- oder Kunststoffstreifen gebildet sein, in den die Belegkomponente (möglichst gleichmäßig) hinein gegeben wird. Die Formatvorrichtung kann auf der Zwischenablagefläche aufstehen oder über dieser beabstandet angeordnet sein. Sie wird ebenso wie die Zwischenablagefläche ortsfest gehalten und zwar ohne jede Relativbewegung zur Zwischenablagefläche, damit die Belegkomponente gezielt und präzise auf der Zwischenablagefläche abgelegt werden kann. Selbstverständlich können auch andere Formen von Formatvorrichtungen verwendet werden, beispielsweise für die Herstellung von quadratischen oder rechteckigen Verteilungen der Belegkomponente auf dem Substrat. Darüber hinaus sind auch kompliziertere Formen möglich, beispielsweise mit ausgesparten Flächen oder andere Umrissformen.

Oberhalb der Zwischenablagevorrichtung befindet sich mindestens eine Aufbringvorrichtung. Vorzugsweise ist die Belegkomponente der Aufbringvorrichtung über einen Einlassabschnitt zuführbar, wobei der Aufbringvorrichtung mindestens ein die Belegkomponente enthaltender Fluid-Masse-Strom, beispielsweise mit strömender Luft, zuführbar ist. Die Aufbringvorrichtung kann durch einen Fliehkraftabscheider gebildet sein. Ein derartiges System ist beispielsweise in EP 2 294 920 A wiedergegeben. Die Integration der Belegkomponente in einen Fluid-Masse-Strom ermöglicht in vorteilhafter Weise einen Transport der Belegkomponente zu der Aufbringvorrichtung, wobei ein Verklumpen oder Verkleben der Belegkomponente verhindert wird. Weiterhin ermöglicht der Fluid-Masse-Strom, dass die Belegkomponente auch über weite Strecken zur Aufbringvorrichtung transportiert werden kann. Bevorzugt ist der Fluid-Masse-Strom ein Luft-Masse-Strom, wobei Luft als Transportmedium für die Belegkomponente (die Masse) dient. Die Ausbildung der Aufbringvorrichtung als Fliehkraftabscheider ermöglicht die Trennung der Belegkomponente von dem Fluidstrom, beispielsweise die Trennung von Luft von in der Luft transportierten Käsespänen. Die Trennung der Belegkomponente von dem Fluidstrom verhindert, dass schon vor dem Aufbringen der Belegkomponente auf die Zwischenablagefläche vorhandene Komponenten durch den Luftstrom beeinträchtigt, zum Beispiel weggeblasen, werden. Der Fliehkraftabscheider umfasst vorzugsweise vier Abschnitte, nämlich erstens einen Einlassabschnitt (beispielsweise Einlasszylinder), der typischerweise am oberen Ende des Fliehkraftabscheiders angeordnet ist und über den der Fluid-Masse-Strom tangential zu einem Verlauf an der Außenwand des Fliehkraftabscheiders an einer Innenseite der Außenwand entlang zugeführt wird, zweitens einen Kegelabschnitt, wobei sich der Kegelabschnitt von einem oberen Ende des Fliehkraftabscheiders zu einem unteren Ende hin verjüngt, drittens ein Tauchrohr, welches zur Abführung des Fluids des Fluid-Masse-Stroms dient, und viertens einen Auslassabschnitt, der an einem unteren Ende des Fliehkraftabscheiders angeordnet ist, über den die Belegkomponente aus dem Fliehkraftabscheider abführbar ist. Die Belegkomponente fällt durch den Auslassabschnitt aus dem Fliehkraftabscheider auf die von der Formatvorrichtung begrenzte Fläche auf der Zwischenablagefläche.

Die Belegkomponente wird stromaufwärts zu der Aufbringvorrichtung mit dem Fludistrom vermischt. Die Belegkomponente liegt vorzugsweise partikulär und insbesondere streu- und rieselfähig und daher in Form von Spänen, Körnern, Flocken, Granulat, Pulver, Gries oder in anderer Form vor.

Das Substrat befindet sich auf der Trägerfläche einer Trägervorrichtung. Die Trägerfläche ist vorzugsweise durch ein Transportband oder -gurt oder durch irgendeinen anderen typischerweise verwendeten Transportförderer für Stückgut gebildet.

In einer weiter bevorzugten Ausführungsform der Erfindung ist die Abwurfkante des Stützgerüstes senkrecht zu der Förderrichtung der Trägerfläche für das Substrat ausgerichtet. Alternativ könnte die Abwurfkante des Stützgerüstes auch parallel zu der Förderrichtung ausgerichtet sein. Dies wäre dann der Fall, wenn das Stützgerüst nicht parallel sondern senkrecht zur Förderrichtung verschiebbar wäre.

Das erfindungsgemäße Verfahren zum Belegen zumindest eines Abschnittes eines Substrats mit mindestens einer Belegkomponente kann insbesondere mit der erfindungsgemäßen Vorrichtung ausgeführt werden. Es umfasst folgende Verfahrensschritte: (a) Fördern der Belegkomponente mittels mindestens einer Aufbringvorrichtung auf mindestens eine Zwischenablagefläche von mindestens einer Zwischenablagevorrichtung, (b) Positionieren des Substrats auf mindestens einer Trägerfläche unterhalb der Zwischenablagefläche, und (c) Bewegen der Zwischenablagefläche, sodass die Belegkomponente von mindestens einer Depositionsfläche auf der Zwischenablagefläche positionsgenau auf die Trägerfläche überführt wird, während die Zwischenablagefläche ortsfest gehalten wird.

In einer bevorzugten Ausführungsform der Erfindung wird die Belegkomponente zum Belegen des Substrats in partikulärer Form in einen Fluid-Masse-Strom überführt und zu einer Aufbringvorrichtung befördert, von der aus die Belegkomponente auf die Zwischenablagefläche gelangt. Die Aufbringvorrichtung kann beispielsweise durch einen Fliehkraftabscheider gebildet sein. In dem Fliehkraftabscheider wird die Belegkomponente wieder von dem Fluidstrom getrennt und fällt auf das horizontal gehaltene Ablageband der Zwischenablagevorrichtung, das vorzugsweise um eine horizontal gehaltene Stützplatte geschlungen ist. Anstelle eines Fliehkraftabscheiders kann die Aufbringvorrichtung auch durch eine Öffnung in der Zuführleitung mit einem geänderten Querschnitt der Leitung im Bereich der Aufbringvorrichtung gebildet werden. Unmittelbar über dem Ablageband befindet sich eine Formatvorrichtung in Form eines aufrecht stehenden Randes, der die Fläche begrenzt, auf der die Belegkomponente auf dem Ablageband verteilt werden soll. Das Ablageband steht während dieser Operation still, da es an einer separaten Halterung ortsfest gehalten wird. Währenddessen wird ein Substrat in einer Ebene unterhalb der Zwischenablagevorrichtung auf einem Trägerband zu einer Stelle befördert, an der es die Belegkomponente von dem Ablageband erhält. Vorzugsweise wird das Substrat stetig befördert und wird auch nicht angehalten, wenn die Belegkomponente auf das Substrat fällt. Nachdem das Ablageband der Zwischenablagevorrichtung mit der Belegkomponente belegt ist, wird das Stützgerüst, das das Ablageband hält, durch translatorischen Vorschub zurückgezogen, sodass es unter der Belegkomponente weggezogen wird. Dabei verbleibt das Ablageband in einer ruhenden Stellung und bewegt sich nicht relativ zu der Belegkomponente. Dadurch fällt die Belegkomponente auf das mittlerweile unterhalb der Formatvorrichtung angekommene Substrat und verteilt sich dort entsprechend der durch die Formatvorrichtung vorgegebenen Form. Nach dem Belegen des Substrats mit der Belegkomponente wird das Stützgerüst wieder vorgeschoben, sodass es wieder unterhalb der Formatvorrichtung angeordnet ist. Damit kann erneut Belegkomponente mittels des Fliehkraftabscheiders auf das Ablageband verteilt werden, damit dieses auf ein weiteres Substrat übertragen werden kann.

Zur näheren Erläuterung der Erfindung dienen die nachfolgend dargestellten Figuren. Diese dienen ausschließlich zur Veranschaulichung und sind daher nicht einschränkend zu verstehen. Es zeigen im Einzelnen:
- Fig. 1: eine schematische Darstellung der erfindungsgemäßen Vorrichtung zum Belegen eines Substrats in fünf aufeinander folgenden Stadien (a), (b), (c), (d), (e), (f) der Verschiebung der Stützplatte, wobei in Fig. 1 a zusätzlich die Aufbringvorrichtung gezeigt ist;
- Fig. 2: eine schematische Darstellung der einzelnen Verfahrensschritte in einem zeitlichen Ablauf;
- Fig. 3: eine Darstellung der Zwischenablagevorrichtung (a) in einem seitlichen Schnitt (schematisch), (b) in einer perspektivischen Ansicht.

Gleiche Bezugszeichen bezeichnen in der nachfolgenden Beschreibung und in den Figuren Elemente mit derselben Funktion.

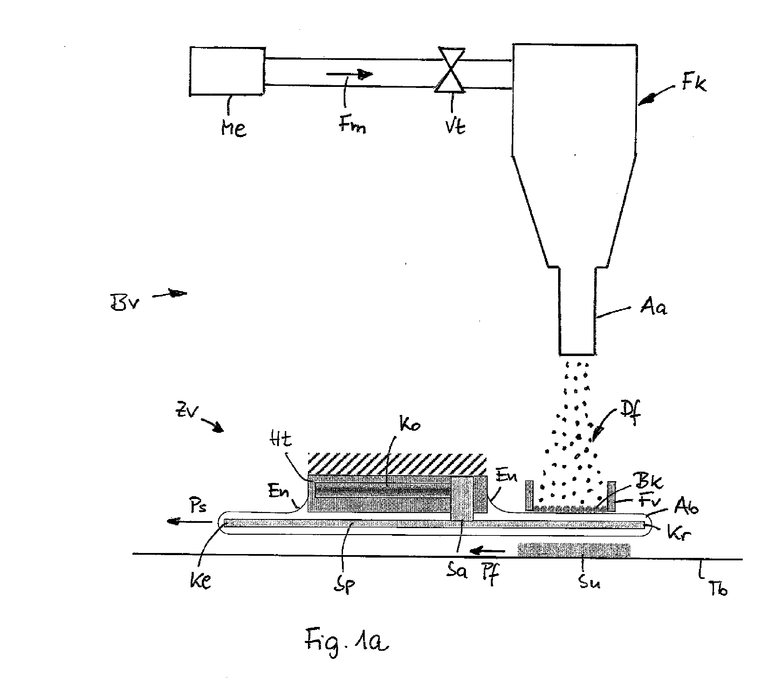

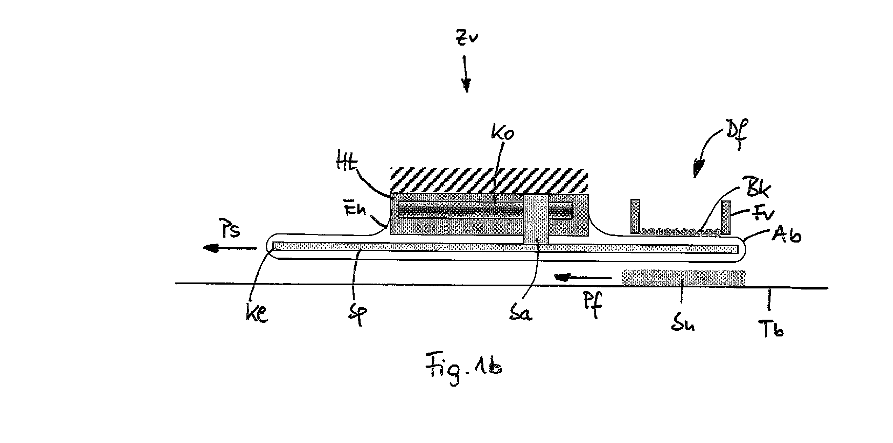

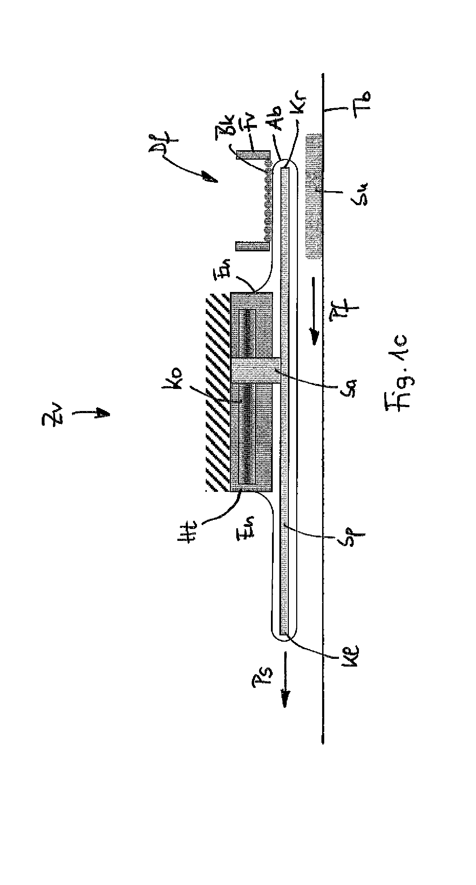

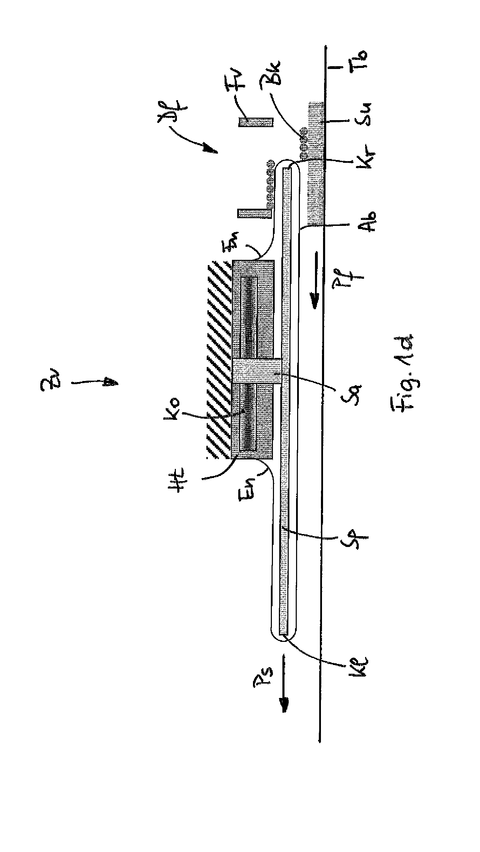

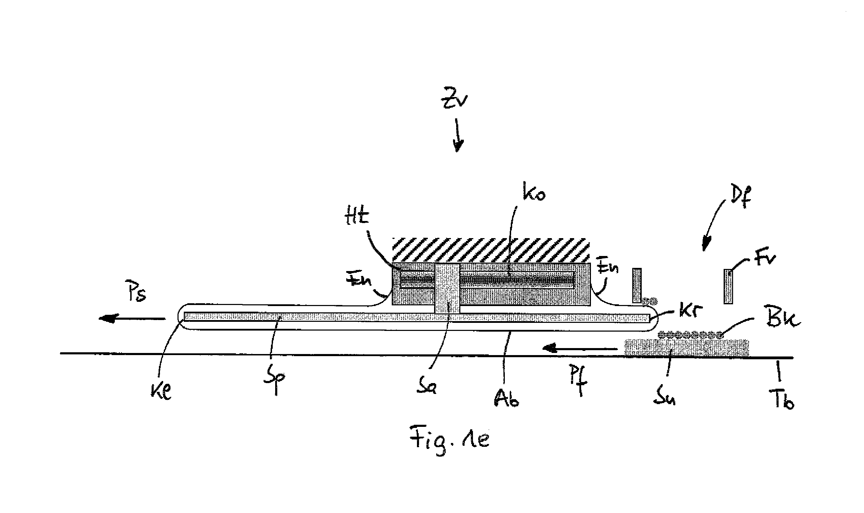

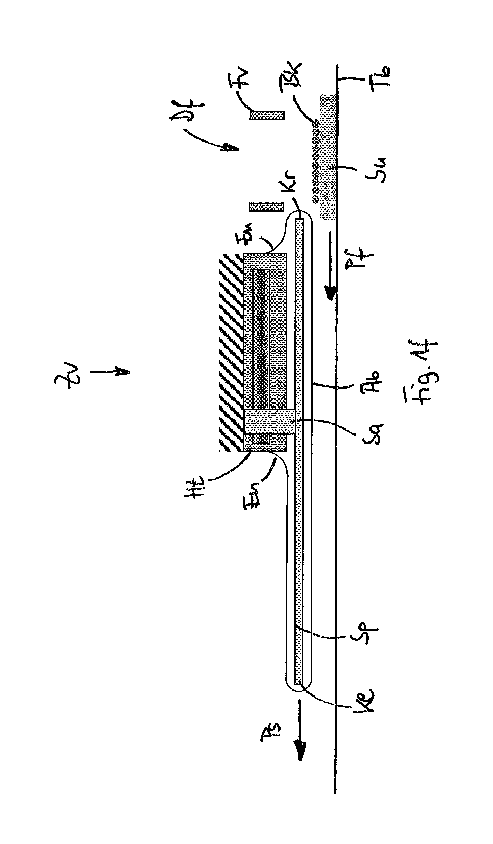

Die in Fig. 1 gezeigte erfindungsgemäße Vorrichtung Bv umfasst eine Aufbringvorrichtung Fk, eine Zwischenablagevorrichtung Zv und ein Trägerband Tb für ein Substrat Su, beispielsweise einen Pizzateigboden. Die Aufbringvorrichtung Fk und die Zwischenablagevorrichtung Zv sind oberhalb des Trägerbandes Tb angeordnet. Lediglich Fig. 1 a zeigt stellvertretend für die weiteren Teilfiguren 1b, 1 c, 1 d, 1 e, 1f zusätzlich die Aufbringvorrichtung Fk. Das dargestellte einzelne Substrat Su stellt lediglich ein Beispiel von mehreren hintereinander auf dem Trägerband Tb liegenden Substraten dar, die jedoch nicht gezeigt sind. In einer Produktionslinie werden mehrere Substrate Su auf dem Trägerband Tb hintereinander und gegebenenfalls in mehreren Reihen von Substraten Su jeweils nebeneinander abgelegt. Das Trägerband Tb befördert das Substrat Su von rechts nach links in der dargestellten Förderrichtung Pf. Die Geschwindigkeit v_{Su} des Trägerbandes Tb mit dem Substrat Su kann beispielsweise 12 m/min betragen. Ein Pizzateigboden hat beispielweise einen Durchmesser von 30 cm.

Die erfindungsgemäße Vorrichtung Bv umfasst ferner eine Aufbringvorrichtung, die durch einen Fliehkraftabscheider Fk oder eine andere Aufbringvorrichtung gebildet ist. Dem Fliehkraftabscheider Fk wird ein Fluid-Masse-Strom Fm aus Belegkomponente Bk, beispielsweise Käsespänen, in einem Luftstrom zugeführt. Die Käsespäne Bk werden dem Luftstrom in der Mischeinheit Me zugeführt. Über ein Ventil Vt kann der Fluid-Masse-Strom reguliert werden. Im Fliehkraftabscheider Fk wird die Belegkomponente Bk von dem Fluid abgetrennt. Das Fluid kann in einem Kreislauf zur Mischeinheit Me zurückgeführt werden. Der Fliehkraftabscheider Fk weist einen Auslassabschnitt Aa auf, der die abgeschiedene Belegkomponente Bk auf die Zwischenablagefläche in Form eines Ablagebandes Ab fallen lässt. Zur zielgenauen Ablage auf einer Depositionsfläche Df auf dem Ablageband Ab kann der Fliehkraftabscheider Fk in drei Raumrichtungen verschwenkt werden. Hierzu ist der Fliehkraftabscheider Fk kardanisch aufgehängt (nicht dargestellt).

Die Vorrichtung Bv umfasst die Zwischenablagefläche in Form des Bandes Ab, das sich flexibel um eine Umlenkkante Kr mit einem kleinen Radius wickeln lässt. Dieses Ablageband Ab kann aus einem einlagigen Polyurethan(PU)-Gurt bestehen. Für die Auswahl des Materials sind sowohl Kriterien, die sich aus dem Anwendungsgebiet, beispielsweise der Lebensmitteltechnologie, zwangsläufig ergeben, als auch die Kriterien des Verschleißes und der Anschaffungskosten maßgeblich. Das Ablageband Ab erstreckt sich möglichst über die gesamte Breite des Trägerbandes Tb, zumindest aber über die von dem Substrat Su eingenommene Transportbreite. Das Ablageband Ab ist mit seinen beiden Enden En an einer Halterung Ht befestigt. Die Halterung Ht dient lediglich zur Befestigung und Halterung des Ablagebandes Ab und ist, abgesehen von dem Ablageband Ab, gegenüber den übrigen dargestellten Elementen in Fig. 1 ortsfest, sodass auch das Ablageband Ab an seinen Enden ortsfest gehalten wird. Das Ablageband Ab bräuchte nicht zwingend zwei Enden aufzuweisen, sondern könnte als Endlosband ausgebildet sein. In diesem Falle wäre es an einer Stelle von der Halterung Ht gehalten. Während des Aufbringvorganges der Belegkomponente Bk bewegt sich die Halterung Ht nicht. Ebenso sind die Enden En des Ablagebandes Ab, über die das Ablageband Ab mit der Halterung Ht verbunden ist, ortsfest. Die Halterung Ht kann beispielsweise ein U-Profil oder Rechteckprofil sein.

Auf dem Ablageband Ab befindet sich auf der rechten Seite der Halterung Ht eine Depositionsfläche Df für die Belegkomponente BK, die mittels des Fliehkraftabscheiders Fk auf dieser Depositionsfläche Df auf dem Ablageband Ab abgelegt worden sind. Um die Belegkomponente Bk auf der Depositionsfläche Df auch dann möglichst gleichmäßig verteilen zu können, wenn diese relativ groß ist, kann der Fliehkraftabscheider Fk in mehreren Freiheitsgraden verschwenkt werden. Hierzu kann der Fliehkraftabscheider Fk kardanisch aufgehängt sein. Um die Depositionsfläche Df während des Aufbringvorganges von dem Fliehkraftabscheider Fk präzise einzugrenzen, ist ferner eine Formatvorrichtung Fv zur gezielten Verteilung der Belegkomponente Bk unmittelbar über dem Ablageband Ab angeordnet, die in Form eines im Wesentlichen elliptischen, aufrecht stehenden Metallrandes ausgebildet ist.

Das Ablageband Ab ist um eine horizontal gehaltene Stützplatte Sp geschlungen. Die Stützplatte Sp kann beispielsweise eine Aluminiumplatte oder eine Edelstahlplatte sein. Die Auswahl auch dieses Materials wird maßgeblich durch Kriterien, die sich aus dem Anwendungsgebiet, beispielsweise der Lebensmitteltechnologie, ergeben, sowie das Kriterium einer geringen Masse vorgegeben, sodass nur eine geringe Kraft für deren Beschleunigung aufgewendet werden muss. Das flexible Ablageband Ab ist auf der rechten Seite über eine Abwurfkante Kr geschlungen und reicht somit von der Oberseite der Stützplatte Sp zur Unterseite. Ferner ist das Ablageband Ab auch auf der linken Seite über ein weitere Kante KI der Stützplatte Sp geschlungen und erstreckt sich somit auch von der Unterseite der Stützplatte Sp bis zu deren Oberseite. Im vorliegenden Beispiel wird auch die Stützplatte Sp über einen Stützarm Sa in der Halterung Ht gehalten. Die Stützplatte Sp ist horizontal verschiebbar, sodass sie nicht ortsfest gehalten wird. Beispielsweise kann der Stützarm Sa über einen Kolben Ko in der Halterung Ht gehalten sein.

Der Kolben Ko ist von einem (nicht dargestellten) Kolbenantrieb in der Halterung Ht horizontal verschiebbar. Diese Verschiebbarkeit wird in der Abfolge der Fig.1a→1b→1c→1d→1e→1f demonstriert: Während der Stützarm Sa im Falle der Fig. 1 a sich noch vollständig auf der rechten Seite der Halterung Ht befindet, wird er in der Abfolge Fig. 1b→1c→1d→1e→1f zunehmend zu einer weiter links liegenden Position bezüglich der Halterung Ht verschoben, wobei er in Fig. 1f die am weitesten links liegende Position erreicht hat. Anstelle des Kolbens Ko und der Befestigung der Stützplatte Sp über einen Stützarm Sa kann die Stützplatte Sp natürlich auch auf andere Art und Weise in der Zwischenablagevorrichtung Zv verschiebbar gehalten sein, beispielsweise mittels eines pneumatischen Aktors, der auch an anderer Stelle in der Vorrichtung fest angeordnet sein kann.

Mit der horizontalen Verschiebung der Stützplatte Sp wird auch das die Stützplatte Sp umschlingende flexible Ablageband Ab mitgenommen: Während das Ablageband Ab in der Stellung gemäß Fig. 1a auf der rechten Seite der Halterung Ht noch eine breite Ablagefläche für die Belegkomponente Bk auf einer Depositionsfläche Df bereit stellt, wird diese Ablagefläche von der Stellung in Fig. 1 a, über die in Fig. 1 b, über die in Fig. 1 c, über die in Fig. 1 d, über die in Fig. 1e bis hin zu der Stellung in Fig. 1f immer kleiner. In der Stellung gemäß Fig. 1f ist die Depositionsfläche Df für die Belegkomponente Bk nicht mehr vorhanden, sodass alle Anteile der Belegkomponente Bk auf das Substrat Su gefallen sind.

Die Abfolge der Fig. 1a→1b→1c→1d→1e→1f veranschaulicht den Prozess des Überführens der Belegkomponente Bk von der Zwischenablagefläche Ab auf das Substrat Su:

In Fig. 1a ist dargestellt, dass die Belegkomponente Bk mittels der Aufbringvorrichtung auf der Depositionsfläche Df auf dem Ablageband Ab abgelegt ist, begrenzt durch den aufrecht stehenden Metallrand Fv. Ein Substrat Su ist mittels des Trägerbandes Tb zu einer Stelle unterhalb der Depositionsfläche Df befördert worden. Wie oben angegeben, beträgt die Lineargeschwindigkeit des Trägerbandes Tb beispielsweise 12 m/min, und der Durchmesser des Substrats Su beträgt ca. 30 cm. Dem entsprechend betragen eine erste Achse und eine zweite Achse des eines elliptisch geformten Metallrandes Fv ebenfalls etwa 30 cm. Nachdem das Substrat Su die vorgenannte Position erreicht hat, wird der Linearvorschub der Stützplatte Sp beispielsweise über eine Lichtschranke aktiviert, sodass die Platte in der angezeigten Pfeilrichtung Ps nach links bewegt wird und zwar über die Stellung in Fig. 1b, die Stellung in Fig. 1c, die Stellung in Fig. 1 d, die Stellung in Fig. 1 e bis zu der Stellung in Fig. 1 f. Dabei wird auch der überwiegende Teil des Ablagebandes Ab in der Pfeilrichtung Ps nach links bewegt. Dieser Vorschubvorgang kann beispielsweise ca. 250 ms dauern. Durch die hohe Lineargeschwindigkeit der Stützplatte Sp und damit durch die Geschwindigkeit v_{Zf}, mit der das Ablageband Ab über die Abwurfkante Kr der Stützplatte Sp gezogen wird, führt dazu, dass an dem Ablageband Ab anhaftende Teilchen der Belegkomponente Bk zuverlässig vom Ablageband Ab weggeschleudert werden und zwar im Wesentlichen nach unten, da diese Teilchen der Belegkomponente Bk durch die Richtungsänderung des Ablagebandes Ab an der Abwurfkante Kr um ca. 180° eine erhebliche Fliehkraft erfahren. Durch die Fliehkraft wird ihre Haftkraft auf dem Band Ab überwunden. Damit werden zuverlässig auch sämtliche Teilchen von dem Ablageband Ab entfernt. Die radiale Beschleunigung wird bei einem geringen Massenbelag auf der Depositionsfläche Df auch durch die Haftkräfte der Belegkomponente Bk auf dem Ablageband Ab weitgehend kompensiert.

Durch den Linearvorschub der Stützplatte Sp nach links wird der Teil des Ablagebandes Ab, der sich zu Beginn der Bewegung oberhalb der Stützplatte Sp befunden hat, dann nach links gezogen, sodass das Ablageband Ab über die Abwurfkante Kr der Stützplatte Sp gezogen wird. Die Abwurfkante Kr bildet eine Linie, die sich quer über die Breite des Trägerbandes Tb erstreckt und die durch die Verschiebung der Stützplatte Sp ebenfalls nach links verschoben wird. Dabei verkleinert sich die Ablagefläche rechts neben der Halterung Ht, während sich der Bereich des Ablagebandes Ab, der sich momentan zwischen der Halterung Ht und der Abwurfkante Kr befindet, nicht bewegt. Dies ist die Folge der ortsfesten Halterung des Ablagebandes Ab über dessen rechtes Ende En an der rechten Seite der Halterung Ht. Dadurch liegt die Belegkomponente Bk völlig ruhig auf der Depositionsfläche Df. Erst in dem Moment, in dem die Abwurfkante Kr und damit die durch diese Kante gebildete Linie Kr den rechten Rand der Depositionsfläche Df erreicht (siehe Fig. 1c), beginnt die Belegkomponente Bk auf das Substrat Su herab zu fallen. In der Stellung der Fig. 1d ist bereits ein Teil der Belegkomponente Bk von der Depositionsfläche Df auf das Substrat Su herabgefallen, in der Stellung der Fig. 1e ein noch größerer Teil, und in der Stellung der Fig. 1f ist die gesamte Menge der Belegkomponente Bk von der Depositionsfläche Df auf das Substrat Su übertragen worden. Es ist klar ersichtlich, dass die auf der Depositionsfläche Df zunächst rechts liegenden Anteile der Belegkomponente Bk ebenfalls auf die rechte Seite des Substrats Su fallen und dass die nachfolgenden mittleren und linken Anteile der Belegkomponente Bk ebenfalls auf die mittleren bzw. linken Bereiches des Substrats Su abgeladen werden. Dadurch kann eine auf der Depositionsfläche Df abgelegte Belegkomponente Bk in Form eines Musters positionsgenau und präzise in Form dieses Musters auf das Substrat Su übertragen werden.

Der gesamte Vorgang des Verschiebens der Stützplatte Sp dauert wie angegeben beispielsweise ca. 250 ms, sodass sich das Trägerband Tb während dieser Zeitspanne nur wenig nach links bewegt: Das Substrat Su wird während dieser Zeitspanne um lediglich 12 m/min 0,25/60 min = 5 cm nach links vorgeschoben.

Im Anschluss an den Belegungsvorgang wird die Stützplatte Sp wieder zurück verschoben, sodass sie in die Ausgangsstellung der Fig. 1a gelangt. Auch dieser Vorgang kann etwa 250 ms dauern.

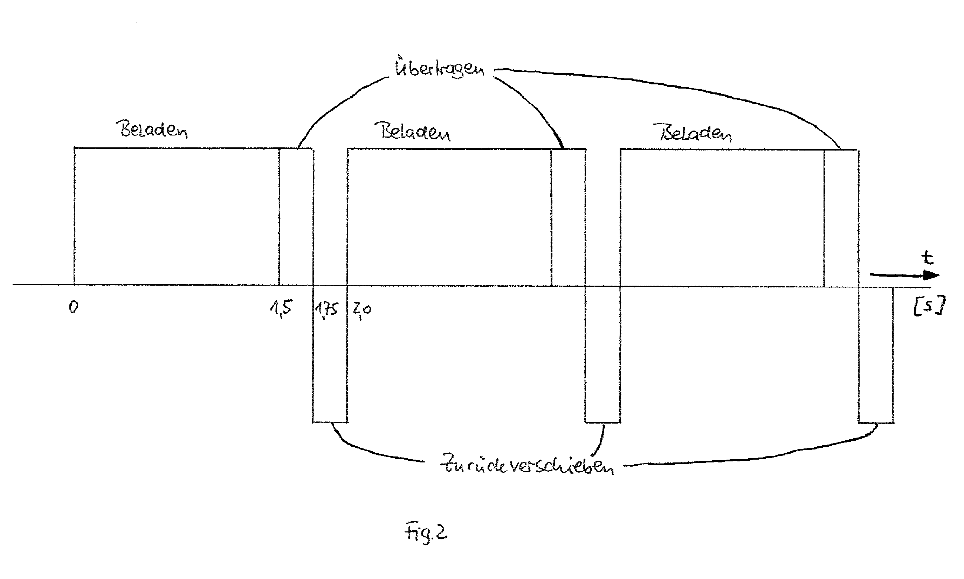

Der Gesamtprozess ist in Fig. 2 schematisch dargestellt: Ein Belegungstakt für die Substrate Su wird durch die Zeitspanne der Beförderung aufeinander folgender Substrate Su auf dem Trägerband Tb vorgegeben: Wird angenommen, dass die Substrate Su in einem Abstand von ca. 40 cm auf dem Trägerband Tb hintereinander liegen, und ferner, dass die Vorschubgeschwindigkeit des Trägerbandes Tb 12 m/min beträgt, beträgt die Taktzeit 0,4 m /12 m/min· 60 = 2 s. Abzüglich einer Zeitspanne für die Vor- und Zurückbewegung der Stützplatte Sp von insgesamt ca. 0,5 s ergibt sich eine Beladezeit für die Depositionsfläche Df mittels des Fliehkraftabscheiders Fk von ca. 1,5 s. Nach dem Beladen der Depositionsfläche Df ("Beladen") (1,5 s) mit der Belegkomponente Bk wird die Belegkomponente Bk innerhalb von 250 ms auf das Substrat Su übertragen ("Übertragen") (1,75 s). Danach wird die Stützplatte Sp innerhalb von weiteren 250 ms wieder in die Ausgangsposition überführt ("Zurückverschieben") (2,0 s).

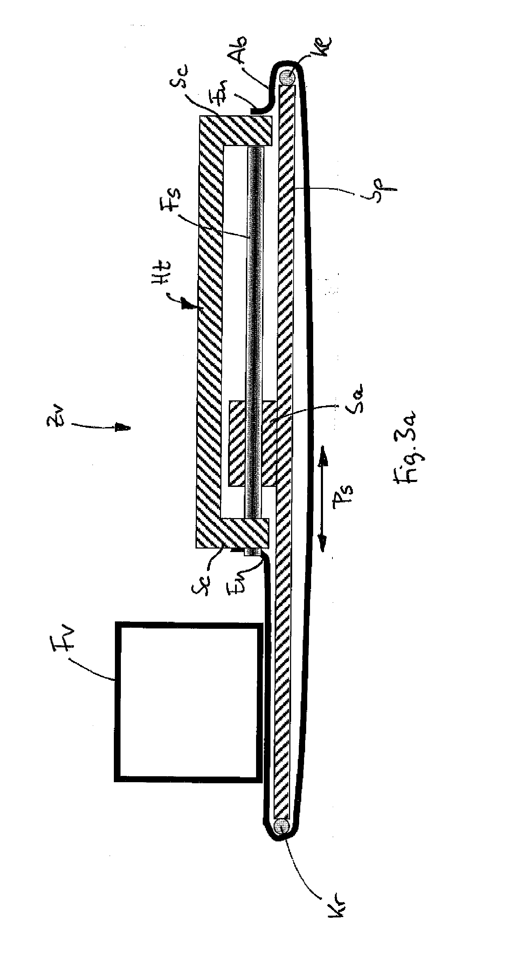

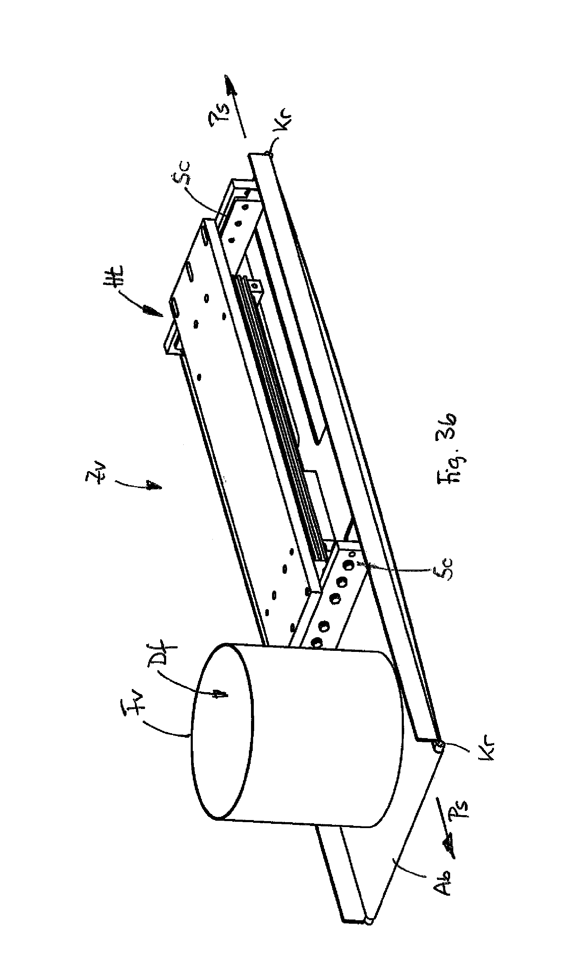

In Fig. 3 ist die Zwischenablagevorrichtung Zv dargestellt. Die Zwischenablagevorrichtung Zv umfasst eine Halterung Ht für ein Ablageband Ab und eine Stützplatte Sp, die von dem Ablageband Ab umschlungen ist. Das Ablageband Ab ist über die Abwurfkante Kr und über die weitere Kante KI der Stützplatte Sp herum geschlungen und über die Enden En des Bandes Ab an seitlich nach unten stehenden Schenkeln Sc der Halterung Ht durch Festklemmen befestigt. Die Abwurfkante Kr und die weitere Kante KI sind durch an der Stützplatte Sp stirnseitig angeschweißte Rundstäbe mit einem Durchmesser von 3 mm gebildet. Durch die Rundstäbe kann das Ablageband Ab leicht über diese Kanten Kr, KI gezogen werden. Die Halterung Ht mit den Schenkeln Sc und den Befestigungsstellen für die Enden En des Ablagebandes Ab sind ortsfest gehalten (nicht dargestellt).

Die Stützplatte Sp ist in den Richtungen Ps verschiebbar gehalten und angetrieben. Der hierfür verwendete Antrieb ist nicht dargestellt. Zur Führung der Stützplatte Sp während der Verschiebung dient ein Stützarm Sa, der mit der Stützplatte Sp fest verbunden ist, sowie eine Führungsschiene Fs, auf der der Stützarm Sa läuft. Mit der Bewegung der Stützplatte Sp mit dem Stützarm Sa auf der Führungsschiene Fs wird das Ablageband Ab mitgenommen, sodass es über die Abwurfkante Kr gezogen wird. Dadurch verringert oder vergrößert sich die Ablagefläche links von der Halterung Ht. Im Bereich der Ablagefläche ist eine Formatvorrichtung Fv in Form eines aufrecht stehenden Metallrandes gehalten.

### Bezugszeichenliste:

- Aa: Auslassabschnitt
- Ab: Zwischenablagefläche, Ablageband
- Bk: Belegkomponente, Käsespäne
- Bv: Vorrichtung zum Belegen des Substrats mit der Belegkomponente
- Df: Depositionsfläche
- En: Enden des Ablagebandes
- Fk: Aufbringvorrichtung, Fliehkraftabscheider
- Fm: Fluid-Masse-Strom
- Fs: Führungsschiene für die Stützplatte
- Fv: Formatvorrichtung
- Ht: Halterung für das Ablageband
- KI: weitere Kante an der Stützplatte
- Kr: Abwurfkante an der Stützplatte, verschiebbare Linie
- Me: Mischeinheit
- Pf: Bewegungsrichtung des Trägerbandes
- Ps: Bewegungsrichtung der Stützplatte
- Sa: Stützarm
- Ko: Kolben
- Sc: Schenkel der Halterung
- Sp: Stützplatte
- Su: Substrat, Pizzateigboden
- Tb: Trägerfläche, Trägerband
- Zv: Zwischenablagevorrichtung

## Patentansprüche

1. Vorrichtung (Bv) zum Belegen zumindest eines Abschnittes mindestens eines Substrats (Su) mit mindestens einer Belegkomponente (Bk), umfassend:
(a) mindestens eine Aufbringvorrichtung (Fk) für die Belegkomponente (Bk),
(b) mindestens eine Trägerfläche (Tb) für das Substrat (Su) und
(c) mindestens eine oberhalb der Trägerfläche (Tb) und unterhalb der Aufbringvorrichtung (Fk) angeordnete Zwischenablagevorrichtung (Zv) mit mindestens einer Zwischenablagefläche (Ab) für die Belegkomponente (Bk), wobei die Belegkomponente (Bk) mittels der Aufbringvorrichtung (Fk) auf der Zwischenablagefläche (Ab) ablegbar ist,
**dadurch gekennzeichnet, dass**
die Zwischenablagefläche (Ab) ortsfest gehalten ist, sodass die Belegkomponente (Bk) vor dem Überführen auf das Substrat (Su) ruht, und dass die Zwischenablagefläche (Ab) bewegbar ist, sodass die Belegkomponente (Bk) von mindestens einer Depositionsfläche (Df) auf der Zwischenablagefläche (Ab) positionsgenau auf das Substrat (Su) überführbar ist.

2. Vorrichtung (Bv) zum Belegen des Substrats (Su) nach Anspruch 1, **dadurch gekennzeichnet, dass** zumindest ein Teil der Zwischenablagefläche (Ab) in einer horizontalen Richtung (Ps) translatorisch bewegbar ist.

3. Vorrichtung (Bv) zum Belegen des Substrats (Su) nach einem der vorstehenden Ansprüche, **dadurch gekennzeichnet, dass** zumindest ein Teil der Zwischenablagefläche (Ab) entlang einer in horizontaler Richtung (Ps) translatorisch verschiebbaren Linie (Kr) um >90° umlenkbar ist, sodass die auf der Zwischenablagefläche (Ab) abgelegte Belegkomponente (Bk) beim Umlenken der Zwischenablagefläche (Ab) auf das Substrat (Su) fällt.

4. Vorrichtung (Bv) zum Belegen des Substrats (Su) nach einem der vorstehenden Ansprüche, **dadurch gekennzeichnet, dass** die Zwischenablagefläche durch mindestens ein Ablageband (Ab) gebildet ist.

5. Vorrichtung (Bv) zum Belegen des Substrats (Su) nach Anspruch 4, **dadurch gekennzeichnet, dass** die Zwischenablagevorrichtung (Zv) ferner jeweils mindestens ein Stützgerüst (Sp) für das Ablageband (Ab) umfasst.

6. Vorrichtung (Bv) zum Belegen des Substrats (Su) nach Anspruch 5, **dadurch gekennzeichnet, dass** das Stützgerüst (Sp) in Form jeweils einer Platte ausgebildet ist.

7. Vorrichtung (Bv) zum Belegen des Substrats (Su) nach einem der Ansprüche 5 und 6,
**dadurch gekennzeichnet, dass** das Ablageband (Ab) in jeweils einer Schlaufe um das Stützgerüst (Sp) herum geführt ist.

8. Vorrichtung (Bv) zum Belegen des Substrats (Su) nach Anspruch 7, **dadurch gekennzeichnet**, das das Stützgerüst (Sp) in der Schlaufe mittels mindestens eines Zwischenablageaktors (SI) im Wesentlichen horizontal verschiebbar ist, sodass die Schlaufe über den Umfang des Stützgerüstes (Sp) abgewälzt wird.

9. Vorrichtung (Bv) zum Belegen des Substrats (Su) nach einem der Ansprüche 4 - 8, **dadurch gekennzeichnet, dass** das Ablageband (Ab) um eine jeweilige verschiebbare Kante (Kr) des Stützgerüstes (Sp) umlenkbar herum geführt ist und durch eine im Wesentlichen horizontale Verschiebung des Stützgerüstes (Sp) um deren jeweilige verschiebbare Kante (Kr) herum ziehbar ist.

10. Vorrichtung (Bv) zum Belegen des Substrats (Su) nach einem der vorstehenden Ansprüche, **dadurch gekennzeichnet, dass** die Zwischenablagefläche (Ab) in einem Winkel >0° zu der Trägerfläche (Tb) geneigt ist.

11. Vorrichtung (Bv) zum Belegen des Substrats (Su) nach einem der vorstehenden Ansprüche, **dadurch gekennzeichnet, dass** unterhalb der Aufbringvorrichtung (Fk) für die Belegkomponente (Bk) und oberhalb der Zwischenablagevorrichtung (Zv) mindestens eine Formatvorrichtung (Fv) zur gezielten Verteilung der Belegkomponente (Bk) auf der Zwischenablagefläche (Ab) angeordnet ist.

12. Vorrichtung (Bv) zum Belegen des Substrats (Su) nach einem der Ansprüche 5 - 11, **dadurch gekennzeichnet, dass** das Ablageband (Ab) um eine jeweilige verschiebbare Kante (Kr) des Stützgerüstes (Sp) umlenkbar herum geführt ist und dass die verschiebbare Kante (Kr) senkrecht zu einer Transportrichtung (Pf) der Trägerfläche (Tb) für das Substrat (Su) ausgerichtet ist.

13. Verfahren zum Belegen zumindest eines Abschnittes eines Substrats (Su) mit mindestens einer Belegkomponente (Bk), umfassend:
(a) Fördern der Belegkomponente (Bk) mittels mindestens einer Aufbringvorrichtung (Fk) auf mindestens eine Zwischenablagefläche (Ab) von mindestens einer Zwischenablagevorrichtung (Zv) und
(b) Positionieren des Substrats (Su) auf mindestens einer Trägerfläche (Tb) unterhalb
der Zwischenablagefläche (Ab),
**dadurch gekennzeichnet, dass** das Verfahren folgenden weiteren Verfahrensschritt umfasst:
(c) Bewegen der Zwischenablagefläche (Ab), sodass die Belegkomponente (Bk) von mindestens einer Depositionsfläche (Df) auf der Zwischenablagefläche (Ab) positionsgenau auf die Trägerfläche (Tb) überführt wird, während die Zwischenablagefläche (Ab) ortsfest gehalten wird.

14. Verwendung der Vorrichtung (Bv) zum Belegen des Substrats (Su) nach einem der Ansprüche 1 - 12 zum Belegen eines Lebensmittels.

15. Verwendung der Vorrichtung (Bv) zum Belegen des Substrats (Su) nach einem der Ansprüche 1 - 12 Belegen eines Teigstückes mit geriebenem Käse oder mit Tomatensauce.
